(19) Europäisches Patentamt
European Patent Office
Office européen des brevets

(11) **EP 3 569 719 B1**

(12) **EUROPEAN PATENT SPECIFICATION**

(45) Date of publication and mention
of the grant of the patent:
**11.05.2022 Bulletin 2022/19**

(21) Application number: **19174353.3**

(22) Date of filing: **14.05.2019**

(51) International Patent Classification (IPC):
*C21D 9/00* $^{(2006.01)}$    *C22C 38/00* $^{(2006.01)}$
*C22C 38/02* $^{(2006.01)}$    *C22C 38/04* $^{(2006.01)}$
*C22C 38/06* $^{(2006.01)}$    *C22C 38/20* $^{(2006.01)}$
*C22C 38/22* $^{(2006.01)}$    *C22C 38/24* $^{(2006.01)}$
*C22C 38/26* $^{(2006.01)}$    *C22C 38/28* $^{(2006.01)}$
*C22C 38/30* $^{(2006.01)}$    *C22C 38/32* $^{(2006.01)}$
*C22C 38/38* $^{(2006.01)}$    *C22C 38/40* $^{(2006.01)}$
*C22C 38/42* $^{(2006.01)}$    *B22D 17/22* $^{(2006.01)}$

(52) Cooperative Patent Classification (CPC):
**C22C 38/22; B22D 17/2209; C21D 9/0068;
C22C 38/001; C22C 38/02; C22C 38/04;
C22C 38/06; C22C 38/20; C22C 38/24;
C22C 38/26; C22C 38/28; C22C 38/30;
C22C 38/32; C22C 38/38; C22C 38/40;**    (Cont.)

(54) **STEEL FOR DIE-CASTING DIE, DIE-CASTING DIE AND USE OF THE DIE-CASTING DIE**

STAHL FÜR DRUCKGIESSFORM SOWIE DRUCKGIESSFORM UND VERWENDUNG DER DRUCKGIESSFORM

ACIER POUR MOULE DE COULÉE SOUS PRESSION, MOULE DE COULÉE SOUS PRESSION ET UTILISATION DU MOULE DE COULÉE SOUS PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2018 JP 2018094066**

(43) Date of publication of application:
**20.11.2019 Bulletin 2019/47**

(73) Proprietor: **Daido Steel Co., Ltd.
Nagoya-shi
Aichi 461-8581 (JP)**

(72) Inventor: **Kawano, Masamichi
Nagoya-shi, Aichi 457-8545 (JP)**

(74) Representative: **Diehl & Partner
Patent- und Rechtsanwaltskanzlei mbB
Erika-Mann-Straße 9
80636 München (DE)**

(56) References cited:
**EP-A1- 0 431 557    EP-A1- 0 882 808
WO-A1-03/083153    FR-A1- 2 838 137
JP-A- H0 250 910**

**(Cont. next page)**

(52) Cooperative Patent Classification (CPC): (Cont.)
**C22C 38/42;** C21D 2211/005; C21D 2211/008;
Y02P 10/20

**Description**

TECHNICAL FIELD

The present invention relates to a steel for a die-casting die, a die-casting die that can be suitably applied in a die-casting on which a release agent is applied in a trace amount and the use of the die-casting die.

BACKGROUND

Die-casting is a technique of press-fitting molten metal into a cavity (a gap of a die having a product shape) in a short time and solidifying the press-fitted molten metal to efficiently produce a casting. Almost 90% of die-casting products are used for automobiles, and die-casting is continuing to support the improvement of the quality of automobiles.

The surface of a die-casting die is subjected to rapid heating by contact with the molten metal and rapid cooling by application of a release agent. As a result, compressive stress and tensile stress periodically act on the surface of the die, and when the number of casting shots increases, a thermal fatigue crack called "heat check" is generated on the metal surface of the die.

Suppressing the heat check is an important issue of die-casting. That is because the heat check will be transferred to the surface of the casting product, which impairs the commercial value of the product, and because the heat check may become a start point of a gross crack (a deep crack penetrating the die).

The weaker the cooling at the time of applying the release agent is, that is, the weaker the tensile stress at the time of applying the release agent is, the more the heat check is suppressed. For this reason, in recent years, for the purpose of suppressing the heat check, "trace amount application" tends to be performed, which means the application amount of the release agent is reduced. There is no clear definition of what extent of the application amount is accounted as a trace amount, but this "trace amount application" has been performed for avoiding rapid cooling at the surface of the die caused by the release agent application.

Since the heat check is less likely to occur by applying the release agent in a trace amount, the high-temperature strength is of low importance as compared with conventional dies. Therefore, alloying elements for securing the strength can be reduced and the pre-hardened hardness of the die can be lowered. Such "saving of alloying elements" and "hardness lowering" are effective in reducing the cost of the die.

Meanwhile, in the die-casting in which the release agent is applied in a trace amount, problems such as extension of cycle time and deterioration in casting quality occur due to a higher temperature of the die. This is because, since the amount of the applied release agent is small, the die surface is kept at a high temperature without being cooled well, the press-fitted molten metal takes more time to solidify (extension of the cycle time), and the microstructure of the slowly solidified casting product is coarse (deterioration in casting quality). In order to solve these problems, it is necessary to accelerate the cooling rate of the die, and increasing the thermal conductivity of the die is an effective way.

When comparing thermal conductivities at 25°C, JIS SKD 61 steel, which is a general-purpose steel for die-casting die, has a low thermal conductivity as about 24 W/m/K. Thus, a high-performance 5Cr steel having an increased thermal conductivity of about 27 W/m/K has been developed. However, even in this case, the thermal conductivity is still on the insufficient side, and problems of the extension of the cycle time and the deterioration in casting quality are still unsolved sufficiently.

In addition, it is not impossible to divert a steel used for an injection-molding die for resin (hereinafter, in some case, referred to as a steel for plastic-molding die) in a die for the die-casting in which the release agent is applied in a trace amount. However, the steel for plastic-molding die has an extremely low high-temperature strength, a low hardenability which may cause easy formation of ferrite or bainite, and a low impact value which may cause a gross crack. Therefore, it is actually difficult to apply the steel for plastic-molding die to the die-casting die.

Patent Document 1 below discloses a die-casting die steel having a component balance in which additive amounts of alloying elements for improving heat check resistance are minimized to focus on the hardenability and the high thermal conductivity. However, the steel disclosed in Patent Document 1 is different from that of the present invention in terms of the component range of Cr-Mo Patent Documents 2 and 3 disclose steels but with different carbon and nickel content to the one of the present invention.

Patent Document 1: JP-A 2017-43809
Patent Document 2: FR 2 838 137 A1
Patent Document 3: EP 0 431 557 A1

## SUMMARY OF THE INVENTION

The present invention has been made in consideration of the above circumstances as background. An object of the present invention is to provide a steel for a die-casting die and a die-casting die that can be suitably applied in the die-casting in which lowering of the die temperature due to application of a release agent is small, and that are capable of simultaneously achieving cost reduction of the die-casting die, shortening of die-casting cycle, and high quality of casting products.

In order to solve the above problems, the present inventor investigated the influence of steel components on strength, thermal conductivity, and impact value. As a result, he found that the above problems can be solved when the contents of C, Si, Mn, Cr, Mo, V, and N are defined in respective narrow ranges. He also confirmed that characteristics can be further stabilized by adding optional elements to basic components.

The present invention provides a steel for a die-casting die as defined in the appended claims.

In the steel for a die-casting die, following components may be contained as unavoidable impurities in following ranges.

P≤0.050, S≤0.008, Cu≤0.30, Ni≤0.30, W≤0.30, O≤0.05, Co≤0.10, Nb≤0.004, Ta≤0.004, Ti≤0.004, Zr≤0.004, B≤0.0001, Ca≤0.0005, Se≤0.03, Te≤0.005, Bi≤0.01, Pb≤0. 03, Mg≤0.02, REM≤0.10, and the like.

Furthermore, the present invention provides a die-casting die formed of the above-mentioned steel for a die-casting die and the use of the die-casting die for die-casting.

In the present invention, the "die" includes not only a die main body but also die parts such as a pin which is assembled to the main body, and the like. In addition, the "die" includes a die made of the steel according to the present invention and subjected to a surface treatment.

According to the present invention as described above, there is provided a steel for a die-casting die and a die-casting die that are suitably applied in a die-casting in which lowering of the die temperature due to application of a release agent is small, and that are capable of simultaneously achieving cost reduction of the die-casting die, shortening of die-casting cycle, and high quality of casting products.

## BRIEF DESCRIPTION OF DRAWINGS

FIG. 1 is a diagram showing a relationship between the tempering temperature and the tempering hardness.
FIG. 2 is a diagram showing a relationship between the tempering temperature range by which a target hardness is obtained and the Cr content.
FIG. 3 is a diagram for explaining a process for carving out a die from the pre-hardened steel material.
FIG. 4 is a diagram schematically showing a continuous cooling transformation of the steel for a die of the present invention.
FIG. 5 is a diagram showing the effect of Mo on suppression of precipitation of ferrite.
FIG. 6 is a diagram showing the temperature transition of the die surface.

## EMBODIMENTS

The present invention will be described below. In the present specification, the values of each chemical component are expressed in mass% basis unless otherwise indicated.

The general-purpose 5Cr die steel SKD61 contains, in mass %, 4.50≤Cr≤5.50, 1.00≤Mo≤1.50, and 0.80≤V≤1.20. In contrast, the steel according to the present invention contains, in mass %, 2.41≤Cr≤2.73, 0.48≤Mo≤0.97, and 0.003≤V≤0.28. Compared with the SKD61 steel, rare metal contents of the steel according to the present invention were dramatically reduced. The high-performance 5Cr die steel has a Mo content of 1.80% by mass or more. Compared with this, the effect of reducing Mo becomes greater in the present invention.

In the steel according to the present invention, in order to make ferrite or bainite difficult to precipitate even with such components with saved amounts of alloying elements, the Mn content was set to, in mass %, 1.20≤Mn≤2.00, which is higher than 0.20≤Mn≤1.20 of the 5Cr die steel. Since Mn is not an expensive element, the cost increase due to the increase in the Mn content is very limited, and the cost reduction effect of reducing the Cr, Mo and V contents is obvious. In consideration of crystal grain size and pre-hardened hardness, the N content of the steel according to the present invention was set to 0.0002≤N≤0.0500, which is equivalent to that of SKD61 steel.

In the steel according to the present invention as described above, the cost of the steel for a die is reduced by saving the amounts of alloying elements. In addition, in the conventional art, mechanical processing has been divided into rough machining and fine machining, and performed twice. However, the mechanical processing can be performed at once in the steel according to the present invention which has been further pre-hardened to a predetermined hardness (26 to 43 HRC). That is, the conventional rough machining, quenching and tempering are not necessary in the steel according to the present invention, and the cost of the die is further reduced by omitting these processes. In addition, since there is no problem of cracking or deformation during quenching, it is not necessary to remanufacture the die due to such problems. From this viewpoint, the cost of the die is further reduced. With respect to the contents described above, the manufacturing processes of dies are compared as follows. In a conventional manufacturing process, a die material (annealing state) is subjected to a drill processing, a first machining (rough), a quenching and tempering (43 to 52 HRC), and a second machining (fine). In contrast, in the manufacturing process of the present invention, a die material (26 to 43 HRC) is subjected to a drill processing and a machining (collective).

The thermal conductivities at 25°C of pre-hardened materials having 43 HRC are about 23 to 24 W/m/K for SKD 61 steel and about 27 W/m/K for a high thermal conductivity-type 5Cr die steel, respectively. In contrast to this, the steel according to the present invention has the thermal conductivity at 25°C being as high as 27 W/m/K or higher. Such a high thermal conductivity is achieved by optimizing the balance between elements solid-solved in matrix and elements precipitated as carbides, nitrides or carbonitrides. When the steel of the present invention is applied in the die-casting in which lowering of the die temperature due to application of a release agent is small, the die has a sufficient resistance to heat check, and it is also possible to shorten the die-casting cycle and achieve high quality for casting products.

JIS standards referred to in the present description are based on the latest information (at May 15, 2018).

Next, reasons for limiting chemical components and the like in the present invention will be described below. The steel for a die-casting die according to the present invention contains C, Si, Mn, Cr, Mo, V, Al, N, and Fe as essential components. Among the chemical components described below, components other than the essential components are optional. The values of each chemical component are expressed in mass% basis unless otherwise indicated.

$$\overset{\mathbf{Z}}{}\ \boxed{0.18 \le C \le 0.24}\ \overset{\mathbf{Z}}{}\ \sout{0.16 \le C \le 0.26}\ :$$

In the case where the C content is less than 0.16, it is difficult to stably obtain a hardness of 26 HRC or higher when the tempering temperature is high. It is also difficult to obtain a hardness of 26 HRC or higher when the present invention is applied to additive manufacturing of powder. Furthermore, the erosion resistance to molten aluminum alloy is remarkably deteriorated. On the other hand, in the case where the C content is more than 0.26, the weldability is impaired. Also, the thermal conductivity is greatly deteriorated. The C content is set to $0.18 \le C \le 0.24$.

$0.001 \le Si \le 0.80$:

In the case where the Si content is less than 0.001, machinability during mechanical processing is remarkably deteriorated. Furthermore, it is difficult to stably obtain a hardness of 26 HRC or higher when the tempering temperature is high. On the other hand, in the case where the Si content is more than 0.80, both the thermal conductivity and the impact value are largely deteriorated. The Si content is preferably in a range of $0.005 \le Si \le 0.70$, and more preferably $0.010 \le Si \le 0.60$.

Table 1 below shows the influence of the Si content on the thermal conductivity at 25°C.

A steel material containing 0.26C-1.67Mn-2.41Cr-0.73Mo-0.16V-0.0084N as basic components and varying in the Si content was used, and the steel material was tempered to 36 HRC after quenching. The thermal conductivity of the tempered material at 25°C was measured by a laser flash method.

As shown in Table 1, in the case where the Si content is 0.8%, the thermal conductivity $\lambda$ is 27 W/m/K, and in the case where the Si content is more than 0.80, $\lambda$ is less than 27. This is one reason for defining the upper limit of the Si content to 0.8%.

[Table 1]

| Si [mass %] | 0.3 | 0.4 | 0.5 | 0.6 | 0.7 | 0.8 | 1.0 |
|---|---|---|---|---|---|---|---|
| Thermal conductivity [W/m/K] | 33.4 | 31.9 | 30.6 | 29.4 | 28.2 | 27 | 24.7 |

$1.20 \le Mn \le 2.00$:

In the case where the Mn content is less than 1.20, the hardenability is insufficient, resulting in insufficient hardness due to mixing of ferrite and reduction in toughness due to mixing of bainite. On the other hand, in the case where the Mn content is more than 2.00, annealing property is seriously deteriorated, and when annealing is performed, the heat treatment for softening is complicated and takes a long time, which leads to an increase in the manufacturing cost. In addition, in the case where the Mn content is more than 2.00, the thermal conductivity is largely deteriorated. Furthermore, when tempering temperature is high, the impact value is deteriorated. This is particularly noticeable in the case where the content of Si or P is large.

The Mn content is preferably in a range of 1.30≤Mn≤1.95, and more preferably 1.40≤Mn≤1.90.

Table 2 below shows the influence of the Mn content on the thermal conductivity at 25°C.

A steel material containing 0.26C-0.60Si-2.73Cr-0.73Mo-0.16V-0.0084N as basic components and varying in the Mn content was used, and the steel material was tempered to 36 HRC after quenching. The thermal conductivity of the tempered material at 25°C was measured by a laser flash method.

As shown in Table 2, in the case where the Mn content is 2.00%, the thermal conductivity $\lambda$ is 27 W/m/K, and in the case where the Mn content is more than 2.00, $\lambda$ is less than 27. This is one reason for defining the upper limit of the Mn content to 2.00%.

[Table 2]

| Mn [mass %] | 0.5 | 1.0 | 1.25 | 1.5 | 1.75 | 2.0 | 2.5 |
|---|---|---|---|---|---|---|---|
| Thermal conductivity [W/m/K] | 31.4 | 29.7 | 28.9 | 28.1 | 27.5 | 27 | 26.3 |

2.41≤Cr≤2.73:

In the case where the Cr content is less than 2.41, the high-temperature strength is low. Furthermore, the hardenability is insufficient, resulting in insufficient hardness due to mixing of ferrite and reduction in toughness due to mixing of bainite. Furthermore, the corrosion resistance is extremely poor, and water-cooling holes inside the die are significantly rusting. On the other hand, in the case where the Cr content is more than 2.73, the thermal conductivity is largely deteriorated. Furthermore, the temperature dependency of the tempering hardness increases, and it is difficult to make the hardness of all parts in the material cross section fall into a narrow range. The Cr content is preferably in a range of 2.43≤Cr≤2.70, and more preferably 2.45≤Cr≤2.68.

Table 3 below shows the influence of the Cr content on the thermal conductivity at 25°C.

A steel material containing 0.26C-0.65Si-1.76Mn-0.73Mo-0.16V-0.0084N as basic components and varying in the Cr content was used, and the steel material was tempered to 36 HRC after quenching. The thermal conductivity of the tempered material at 25°C was measured by a laser flash method.

As shown in Table 3, in the case where the Cr content is 2.73%, the thermal conductivity $\lambda$ is 27 W/m/K, and in the case where the Cr content is more than 2.73, $\lambda$ is less than 27. This is one reason for defining the upper limit of the Cr content to 2.73%.

[Table 3]

| Cr [mass %] | 1.0 | 1.47 | 2.03 | 2.51 | 2.73 | 3.12 | 3.49 |
|---|---|---|---|---|---|---|---|
| Thermal conductivity [W/m/K] | 32.7 | 30.4 | 28.6 | 27.4 | 27 | 26.3 | 25.2 |

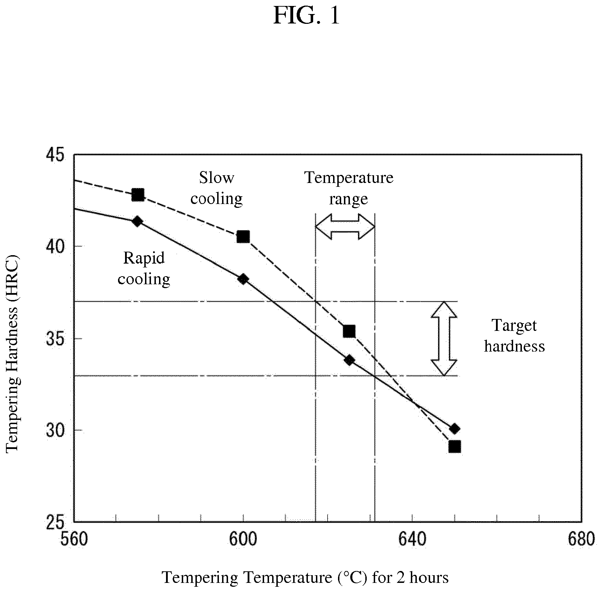

The upper limit of the Cr content was determined also in consideration of easy adjustment of the quenching hardness. The size of the materials to be quenched varies from small to large. The quenching rate is high (rapid cooling) in a small material, and is low (slow cooling) in a large material. Furthermore, the quenching rate is high (rapid cooling) in the surface of the material, and is low (slow cooling) inside the material. Therefore, in the case where the quenching rate is different between the rapid cooling and the slow cooling, the tempering hardness becomes different even when the tempering is performed under the same condition. This is because the temper-softening resistance is different between martensite obtained by the rapid cooling and bainite obtained by the slow cooling. An example thereof is shown in FIG. 1.

Here, an important parameter is "temperature range" in which the target hardness of 33 to 37 HRC can be obtained regardless of the quenching rate (see FIG. 1). Generally, since this "temperature range" is not extremely wide, it is difficult to make the hardness of all parts in the cross section of all products fall into a target hardness range in the case where the materials with different quenching rates are tempered.

Furthermore, temperature fluctuation in a tempering furnace and temperature difference due to positional difference in the furnace are also important factors that make it difficult to make the hardness fall into the target hardness range. Normally, the temperature of the furnace which is tended to be held at a predetermined temperature is not completely constant as time goes by, and there is a fluctuation of about ±5°C. That is, a difference of about 10°C is generated between the lowest temperature and the highest temperature. In addition, a temperature difference of 5 to 15°C may be generated due to the positional difference (center or corner) in the furnace.

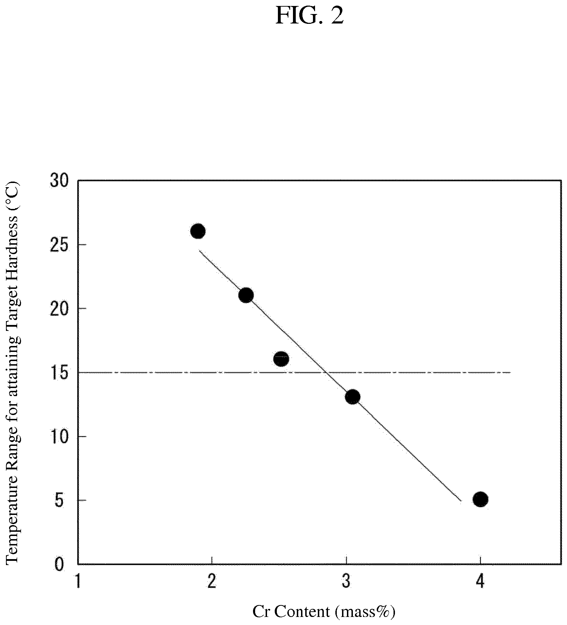

In view of the above, it can be said that a steel having a "temperature range" of 15°C or higher is desirable for making the hardness of all products having different quenching rates and sizes falls into the target hardness range. FIG. 2 shows the correlation between the temperature range and the Cr content of the steel material, and it can be found that the temperature range becomes 15°C or higher in the case where the Cr content is about 2.73 or less. This is another reason for defining the upper limit of the Cr content to 2.73%.

0.48≤Mo≤0.97:
In the case where the Mo content is less than 0.48, secondary curing has only small contribute to the hardness, and it is difficult to stably obtain a high hardness of 26 HRC or higher when the tempering temperature is high. In addition, in the case where the Mo content is less than 0.48, the hardenability is insufficient, resulting in insufficient hardness due to mixing of ferrite and reduction in toughness due to mixing of bainite. On the other hand, in the case where the Mo content is more than 0.97, the impact value and the fracture toughness are deteriorated, and there is an increased risk that a gross crack occurs on the die. Also, the material cost increases significantly. The Mo content is preferably in a range of 0.50≤Mo≤0.95, and more preferably 0.52≤Mo≤0.90.

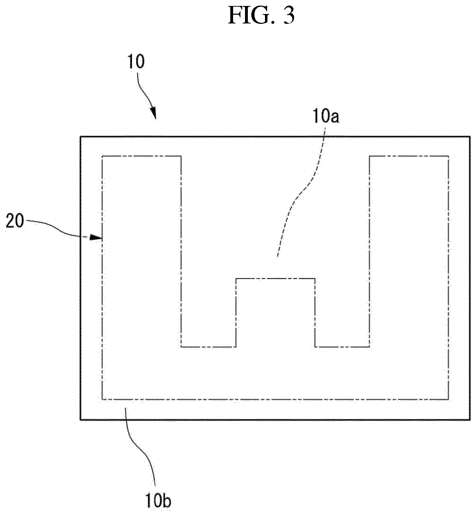

Meanwhile, the steel according to the present invention belongs to "pre-hardened steel material". This is a steel material that has been pre-hardened by quenching and tempering, to have a low hardness of 26 to 43 HRC with which direct collective processing can be performed. For example, a die user carves out a die 20 from a steel material 10 as shown in FIG. 3, and an interior portion 10a of the steel material 10 is made to be exposed as the surface of the die 20 in shape.

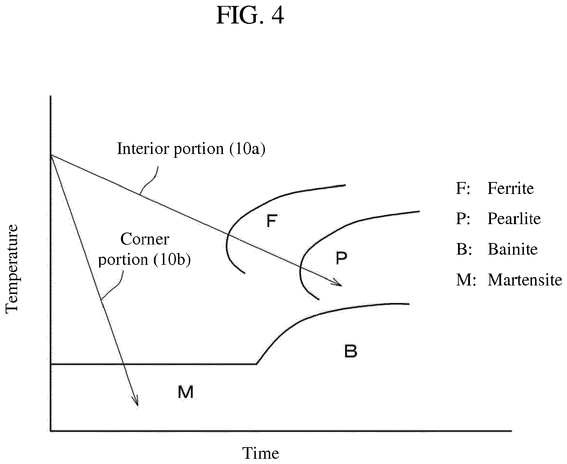

As shown in FIG. 4, in quenching, the interior portion 10a of the steel material, at which the quenching rate is low, has a higher possibility of precipitating ferrite than a surface side (e.g., a corner portion 10b of FIG. 3) of the steel material 10, at which the quenching rate is high. When ferrite is precipitated at the interior portion 10a of the steel material 10, the portion may be exposed as the surface of the die by mechanical processing as described above. When die-casting is performed in this state, a crack easily occurs in the portion where ferrite is precipitated since ferrite has a low strength, and the service life of the die is remarkably shortened. Therefore, the pre-hardened steel according to the present invention requires to have a hardenability in which ferrite does not precipitate even in a steel material inner portion having a low quenching rate.

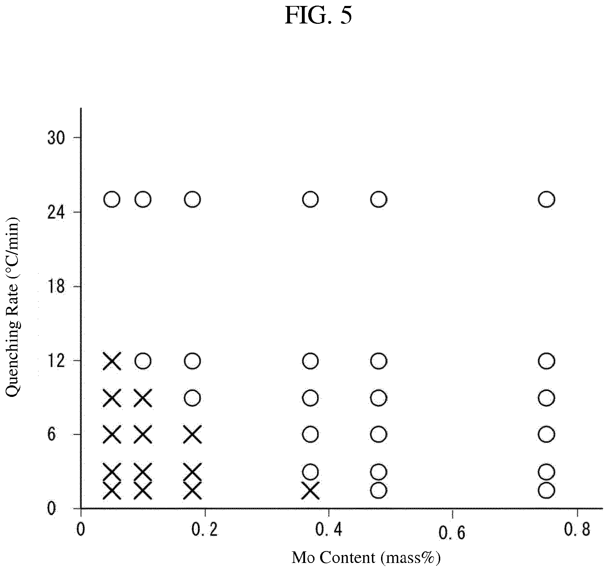

In general, since the quenching rate is lowered to about 9°C/min in the inner potion of a large steel material, it is necessary to prevent precipitation of ferrite at a rate of 9°C/min. Addition of Mo is effective for suppressing precipitation of ferrite, which is shown in FIG. 5.

Here, the quenching rate at which ferrite is precipitated is examined by using a steel material containing 0.16C-0.2Si-1.35Mn-2.41Cr-0.19V-0.0092N as basic components and varying in the Mo content. In FIG. 5, "o" means that ferrite is not precipitated, and "×" means that ferrite is precipitated. Of course, "o" is preferable. In the case where the Mo content is 0.48 or more, the result is "o" even in the quenching rate of 2°C/min. Therefore, the Mo content is defined to 0.48% or more in the present invention.

0.003≤V≤0.28:
In the case where the V content is less than 0.003, since nitrides or carbonitrides are reduced, the effect of suppressing coarsening of austenite crystal grains is poor, resulting in a deterioration in the impact value due to the coarsening of grains. In addition, secondary curing has only small contribute to the hardness, and it is difficult to stably obtain a high hardness of 26 HRC or higher when the tempering temperature is high. On the other hand, in the case where the V content is more than 0.28, the cost increases significantly. In addition, the coarse nitrides or carbonitrides increase, which serve a starting point of cracking, so that the impact value and fatigue strength are deteriorated. The V content is preferably in a range of 0.008≤V≤0.27 and more preferably 0.01≤V≤0.25.

0.0005≤A1≤0.15:
In the case where the Al content is less than 0.0005, since AIN is reduced, the effect of suppressing coarsening of austenite crystal grains is poor, resulting in a deterioration in the impact value due to the coarsening of grains. Therefore, in the case where nitrides are used for a surface treatment, curing of the surface layer is likely to be insufficient. On the other hand, in the case where the Al content is more than 0.15, the thermal conductivity is deteriorated. In addition, oxide of Al increases, which serve a starting point of cracking, so that the impact value and fatigue strength are deteriorated. The Al content is preferably in a range of 0.0008≤Al≤0.13, and more preferably 0.001≤Al≤0.11.

0.0002≤N≤0.050:
In the case where the N content is less than 0.0002, since nitrides or carbonitrides are reduced, the effect of suppressing coarsening of austenite crystal grains is poor, resulting in a deterioration in the impact value due to the coarsening of grains. On the other hand, in the case where the N content is more than 0.050, the time and cost of refining required for N addition increase, resulting in an increase in material cost. Furthermore, coarse nitrides and carbonitrides increase, which serve a starting point of cracking, so that the impact value and fatigue strength are deteriorated. The N content is preferably in a range of 0.0008≤N≤0.040, and more preferably 0.0012≤N≤0.030, from the standpoint of excellent balance of various characteristics.

Thermal conductivity λ [W/m/K] is 27.0 or higher.

In order to cool the product quickly and reduce the damage to die caused by the thermal stress, it is necessary to increase the thermal conductivity of the die. The general-purpose steel SKD61 used for die-casting or the like has a thermal conductivity λ at 25°C of about 24 W/m/K. In order to cool the product quickly and reduce the damage to die, the thermal conductivity λ is necessarily 27 W/m/K or higher, and more preferably 28 W/m/K or higher. Although the upper limit of the thermal conductivity λ is not particularly limited, when the thermal conductivity is increased beyond 44 W/m/K, the effect is saturated without many practical benefits.

Hardness is 26 to 43 HRC.

The die is required to have good wear resistance and deformation resistance. Therefore, the hardness is important for the die. In the case where the hardness is 26 HRC or higher, when the die is applied in the die-casting in which lowering of the die temperature due to application of a release agent is small, problems of wear and deformation are less likely to occur. The hardness is preferably 27 HRC or higher. On the other hand, in the case where the hardness is too high, it is very difficult to carve out the die from the steel material. Therefore, it is also necessary to keep the hardness to 43 HRC or lower.

The steel according to the present invention has small contents of Mn and Cr in total as compared with that of SKD61 steel, which is a general-purpose steel for a die-casting die. Therefore, the steel according to the present invention does not have a very high hardenability. Addition of Cu or Ni is effective in improving the hardenability. Specifically, containing $0.30 < Cu \leq 1.50$ is preferable.

These elements shift not only ferrite nose but also the bainite nose to a long-duration side, thereby improving the hardenability stably.

Cu also has an effect of suppressing the growth of austenite crystal grains during quenching due to the solute drag effect. However, in the case of an excessive Cu content, there are problems of cracking at the time of hot-working and increasing in cost. In the case of an excessive Ni content, there is a problem of increasing in cost.

Addition of B is also effective as a measure for improving the hardenability. Specifically, containing $0.0001 < B \leq 0.0050$ is preferable.

B has a large effect of shifting the ferrite nose to the long-duration side with a slight addition. On the other hand, the addition of B does not have much influence on the position of the bainite nose.

When B forms BN, the effect of improving hardenability is lost. Therefore, B must be present alone in the steel. Specifically, this can achieved by forming nitrides with elements having a stronger affinity with N than B has, thereby preventing B from bonding to N. Examples of such the element include Nb, Ta, Ti and Zr. These elements have the effect of fixing N even in an impurity level contents, but these elements may be added in the respective ranges described below, depending on the content of N.

Even though B bonds to N in the steel to form BN, if excessive B is present alone in a steel, the excessive B enhances hardenability. B is also effective to the improvement of machinability. In the case of improving machinability, BN is made to be formed. BN has properties similar to those of graphite, decreases cutting resistance, and additionally improves chip breakability. In the case where B and BN are present in a steel, hardenability and machinability are simultaneously improved.

The steel according to the present invention has small contents of Cr, Mo and V as compared with that of SKD61 steel, which is a general-purpose steel for a die-casting die. Therefore, the steel according to the present invention does not have a very high high-temperature strength. In order to ensure high-temperature strength, selective addition of W or Co is effective. Specifically, containing at least one of $0.30 < W \leq 4.00$ and $0.10 < Co \leq 3.00$ is preferable.

W improves the strength by precipitation of carbides. Co improves the strength by solid solution into a matrix, and at the same time contributes to precipitation hardening through the change of carbide form. These elements also have an effect of suppressing the growth of austenite crystal grains during quenching due to the solute-drag effect. However, if any element exceeds the respective predetermined content, the characteristics are saturated and cost increases significantly.

In order to suppress the growth of austenite grains during quenching, selective addition of Nb, Ta, Ti, and Zr is also effective. Specifically, containing at least one of $0.004 < Nb \leq 0.200$, $0.004 < Ta \leq 0.200$, $0.004 < Ti \leq 0.200$, and $0.004 < Zr \leq 0.200$ is preferable. Carbides or carbonitrides generated by the bonding with these elements suppress the movement of the austenite crystal grain boundary. However, if any element exceeds the respective predetermined content, carbides, nitrides or oxides are excessively generated, which serve a starting point of a cracking of the die.

The steel according to the present invention has a small Si content as compared with that of SKD61 steel, which is a general-purpose steel of a die-casting die. Therefore, the steel according to the present invention does not have a very high machinability. In order to improve machinability, selective addition of S, Ca, Se, Te, Bi, and Pb is also effective. Specifically, containing at least one of $0.0080 < S \leq 0.0500$, $0.0005 < Ca \leq 0.2000$, $0.03 < Se \leq 0.50$, $0.005 < Te \leq 0.100$, $0.01 < Bi \leq 0.50$, and $0.03 < Pb \leq 0.50$ is preferable. If any element exceeds the respective predetermined content, hot workability and impact value are greatly deteriorated.

EXAMPLE

Material cost and characteristics were evaluated for Invention Steels 2, 4-6, 12-13, 15-16, Reference steels 1, 3, 7, 8, 11, 14 and 5 kinds of Comparative Steels (total 21 kinds of steel) shown in Table 4 below. Comparative Steel 1 is JIS SCM420 steel. Although it is not usually used in a die-casting die, Comparative Steel 1 was added to the evaluation as a representative of Cr-Mo-based materials. Comparative Steel 2 is a 3Cr-based JIS SKD7 steel. Comparative Steel 3 is a general-purpose steel JIS SKD61 for a die-casting die. Comparative Steel 4 is a high-performance steel (commercial product) for a die-casting die. Comparative Steel 5 is a kind of steel which is more similar to the present invention than other Comparative Steels.

[Table 4]        Chemical composition (mass %, Balance: Fe)

| | | C | Si | Mn | Cr | Mo | V | Al | N | Cr+Mo+V | Others |
|---|---|---|---|---|---|---|---|---|---|---|---|
| Inventive steels: 2,4-6,12,13,15,16 Reference steels: 1,3,7-11,14 | 1 | 0.16 | 0.01 | 1.41 | 2.68 | 0.59 | 0.012 | 0.007 | 0.003 | 3.28 | |
| | 2 | 0.21 | 0.31 | 1.66 | 2.41 | 0.83 | 0.16 | 0.023 | 0.017 | 3.40 | |
| | 3 | 0.26 | 0.60 | 1.90 | 2.73 | 0.90 | 0.25 | 0.002 | 0.030 | 3.88 | |
| | 4 | 0.19 | 0.20 | 1.53 | 2.50 | 0.96 | 0.22 | 0.016 | 0.008 | 3.68 | |
| | 5 | 0.23 | 0.46 | 1.78 | 2.59 | 0.48 | 0.08 | 0.031 | 0.023 | 3.15 | |
| | 6 | 0.22 | 0.25 | 1.75 | 2.52 | 0.73 | 0.19 | 0.011 | 0.010 | 3.44 | |
| | 7 | 0.25 | 0.34 | 1.61 | 2.46 | 0.65 | 0.09 | 0.0008 | 0.013 | 3.20 | |
| | 8 | 0.17 | 0.15 | 1.47 | 2.73 | 0.81 | 0.03 | 0.040 | 0.039 | 3.57 | 0.73Cu |
| | 9 | 0.20 | 0.53 | 1.31 | 2.66 | 0.76 | 0.28 | 0.027 | 0.0006 | 3.70 | 1.02Ni |
| | 10 | 0.23 | 0.70 | 1.96 | 2.61 | 0.63 | 0.06 | 0.055 | 0.009 | 3.30 | 0.42Cu, 0.63Ni |
| | 11 | 0.25 | 0.40 | 1.22 | 2.53 | 0.75 | 0.008 | 0.066 | 0.009 | 3.29 | 0.04Ti, 0.0009B |
| | 12 | 0.19 | 0.05 | 1.60 | 2.63 | 0.71 | 0.28 | 0.048 | 0.020 | 3.62 | 3.46W |
| | 13 | 0.24 | 0.22 | 1.70 | 2.57 | 0.66 | 0.26 | 0.074 | 0.001 | 3.49 | 1.03Co |
| | 14 | 0.26 | 0.26 | 1.80 | 2.48 | 0.97 | 0.005 | 0.14 | 0.045 | 3.46 | 0.02Nb, 0.02Ta |
| | 15 | 0.22 | 0.09 | 1.52 | 2.49 | 0.60 | 0.11 | 0.013 | 0.008 | 3.20 | 0.03Nb |
| | 16 | 0.18 | 0.12 | 1.68 | 2.72 | 0.81 | 0.13 | 0.009 | 0.007 | 3.66 | 0.036S |
| Comparative Steel | 1 | 0.21 | 0.25 | 0.71 | 1.13 | 0.16 | 0.002 | 0.022 | 0.008 | 1.29 | |
| | 2 | 0.33 | 0.49 | 0.58 | 3.08 | 2.92 | 0.55 | 0.029 | 0.018 | 6.55 | |
| | 3 | 0.38 | 1.02 | 0.44 | 5.21 | 1.20 | 0.91 | 0.021 | 0.021 | 7.32 | |
| | 4 | 0.34 | 0.26 | 1.08 | 5.54 | 2.46 | 0.57 | 0.011 | 0.020 | 8.57 | |
| | 5 | 0.22 | 0.25 | 1.75 | 2.12 | 0.22 | 0.39 | 0.032 | 0.010 | 2.73 | |

Evaluation on material cost:

The material cost was evaluated by the amount of Cr+Mo+V which is directly related to the cost. The material cost was evaluated as "A" in the case where the amount of Cr+Mo+V was less than 2.0; and evaluated as "B" in the case where the amount was 2.0 or more and less than 5.0. On the other hand, in the case where the amount was 5.0 or more, which is substantially equal to or larger than that of SKD 61 steel (Comparative Steel 3), the material cost was evaluated as "C".

The results are shown in Table 5 below. It can be found that the steels according to the present invention have advantages in material cost as compared with a general-purpose steel JIS SKD61 (Comparative Steel 3) for a die-casting die.

[Table 5]

| | | Material cost | Ferrite precipitation | Tempering hardness | Thermal conductivity | Impact value | Drill machinability | Heat check resistance | Cycle shortening | Microstructure of casting product |
|---|---|---|---|---|---|---|---|---|---|---|
| Inventive steels: 2,4-6,12,13,15,16   Reference steels: 1,3,7-11,14 | 1 | B (3.28) | B | 34 | A (43.5) | B (114) | B (26) | A | A (4 sec) | A |
| | 2 | B (3.40) | B | 36 | A (35.0) | B (148) | B (26) | A | A (3 sec) | B |
| | 3 | B (3.88) | B | 38 | B (27.8) | B (135) | B (28) | B | B (2 sec) | B |
| | 4 | B (3.68) | B | 35 | A (36.9) | B (168) | B (25) | A | A (3 sec) | B |
| | 5 | B (3.15) | B | 34 | A (32.8) | B (153) | B (28) | A | A (3 sec) | B |
| | 6 | B (3.44) | B | 36 | A (35.1) | B (221) | B (27) | A | A (3 sec) | B |
| | 7 | B (3.20) | B | 35 | A (33.9) | B (182) | B (26) | A | A (3 sec) | B |
| | 8 | B (3.57) | B | 35 | A (39.0) | B (121) | B (24) | A | A (3 sec) | A |
| | 9 | B (3.70) | B | 36 | B (31.4) | B (141) | B (26) | A | B (2 sec) | B |
| | 10 | B (3.30) | B | 34 | B (29.9) | B (174) | B (29) | B | B (2 sec) | B |
| | 11 | B (3.29) | B | 36 | A (34.7) | B (163) | B (26) | A | A (3 sec) | B |
| | 12 | B (3.62) | B | 35 | A (40.3) | B (104) | B (24) | A | A (4 sec) | A |
| | 13 | B (3.49) | B | 36 | A (34.3) | B (117) | B (24) | A | A (3 sec) | B |
| | 14 | B (3.46) | B | 38 | A (34.2) | B (109) | B (25) | A | A (3 sec) | B |
| | 15 | B (3.20) | B | 37 | A (40.0) | B (193) | B (26) | A | A (4 sec) | B |
| | 16 | B (3.66) | B | 36 | A (40.7) | B (83) | A (33) | A | A (4 sec) | A |
| Comparative Steel | 1 | A (1.29) | C | - | - | - | - | - | - | - |
| | 2 | C (6.55) | B | 46 | B (30.1) | D (41) | C (22) | B | B (2 sec) | B |
| | 3 | C (7.32) | B | 45 | D (23.9) | C (64) | A (31) | D | D (0 sec) | D |
| | 4 | C (8.57) | B | 46 | C (26.9) | B (188) | D (20) | C | C (1 sec) | C |
| | 5 | B (2.73) | C | - | - | - | - | - | - | - |

The evaluation of characteristics was carried out for various basic characteristics with respect to a small amount of molten materials and a die-casting test using materials with an industrial size.

First, various basic characteristics with respect to a small amount of molten materials are described. The molten steel was cast into a 150-kg ingot, and then homogenized at 1,240°C for 24 hours. Then, the material was formed into a bar shape having a rectangular cross section of 60 mm × 45 mm by hot forging. Subsequently, the material was heated to 1,020 °C and cooled to a room temperature thereby performing normalizing, and held at 690°C for 12 hours thereby performing tempering. Test pieces were prepared from the tempered material and subjected to the evaluations.

Evaluation on ferrite precipitation during quenching:

A test piece having an outer shape of 4 mm in diameter × 10 mm in length was carved out from the above-prepared material, and the obtained test piece was heated to a quenching temperature, held for 60 minutes, and then cooled to 100°C or less at a cooling rate of 12°C/min. The quenching temperature is 900°C for the 16 kinds of Invention and Reference Steels and for Comparative Steels 1 and 5, and 1,030°C for Comparative Steels 2 to 4.

The cooling rate of 12°C/min corresponds to the cooling rate at a high-temperature area of a center portion of a steel material having a width of 530 mm and a thickness of 250 mm and a length of 650 mm, at which the cooling rate becomes slowest when the steel material is quenched with air blast. After cooling, the test piece was cut, the obtained cross section was corroded to observe its microstructure, thereby confirm the presence or absence of a ferrite phase. The ferrite precipitation was evaluated as "B" in the case where the occurrence of the ferrite phase was not observed; and evaluated as "C" in the case where the occurrence of the ferrite phase was observed.

The results are shown in Table 5. Ferrite was precipitated in Comparative Steels 1 and 5. The amount of ferrite was very large in Comparative Steel 1 which had a significantly insufficient hardenability. The amount of ferrite of Comparative Steel 5 was also in a level which will adversely affect when a die is formed thereof. It is clear that Comparative Steels 1 and 5 are not suitable for a pre-hardened steel material having a large cross section. In the case where Comparative steel 1 or 5 is subjected to pre-hardened quenching at a large cross section, ferrite is precipitated inside. When a die is carved out from such a pre-hardened steel material, a portion where ferrite has been precipitated may become a design surface of the die (a surface in contact with melted metal in casting), and a heat check will generate at an early stage in the portion where ferrite has been precipitated as a starting point.

It can be found that other steels have no ferrite and have a hardenability which is suitable for a pre-hardened steel material having a large cross section. In the following evaluations, Comparative Steels 1 and 5 which are not suitable for a pre-hardened steel material having a large cross section were excluded from evaluation objects.

Evaluation on tempering hardness:

A small block of 15 mm × 15 mm × 20 mm carved out from the above-prepared material, and the obtained small block was heated to a quenching temperature, held for 60 minutes, and then cooled to 100°C or less at a cooling rate of 12°C/min. The quenching temperature is 900°C for the 16 kinds of Invention and Reference Steels, and 1,030°C for Comparative Steels 2 to 4. Furthermore, the small block was held at 620°C for 2 hours and then cooled to a room temperature to thereby perform tempering, and the HRC hardness of the tempered small block was measured.

The results are shown in Table 5. All kinds of steels (excluding Comparative Steels 1 and 5 which were not evaluated further) have a hardness of 34 HRC or higher which is suitable for a pre-hardened steel material. That is, even in the case where the tempering is performed at a higher temperature and for a longer time, a hardness of 26 HRC or higher can be obtained. Of course, if tempering is performed at a lower temperature and for a shorter time, a high hardness such as 43 HRC can be obtained. Invention Steels can have a hardness of 26 to 43 HRC by adjusting the tempering condition.

Evaluation on thermal conductivity:

The tempered small block was subjected to additional tempering under various conditions and pre-hardened to have a hardness of 34 HRC. Test piece with a shape of 10 mm in diameter ×2 mm in thickness for measuring thermal conductivity was prepared from the small block. The thermal conductivity at 25°C of the test piece was measured by a laser flash method. From the viewpoint of increasing service life of a die and improvement of casting quality, a higher thermal conductivity is preferable. The thermal conductivity was evaluated as "A" in the case where the value of the thermal conductivity [W/m/K] exceeded 32; evaluated as "B" in the case where the value exceeded 27 and was 32 or less; evaluated as "C" in the case where the value exceeded 24 and was 27 or less; and evaluated as "D" in the case where the value was 24 or less.

The results are shown in Table 5. In the table, the actually measured values of the thermal conductivity [W/m/K] are shown in parentheses together with the evaluations of A, B, C, and D.

Comparative Steels 3 and 4, which are conventional steels for a die-casting die, had low thermal conductivity. In particular, the thermal conductivity of Comparative Steel 3 with the high Si content did not reach 24 W/m/K. In contrast, Invention Steels had a high thermal conductivity of approximately 30 to 44 W/m/K.

Evaluation on impact value:

A square bar of 11 mm × 11 mm × 55 mm was carved out from the above-prepared material, and the obtained square bar was heated to a quenching temperature, held for 60 minutes, and then cooled to 100°C or less at a cooling rate of 12°C/min. The quenching temperature is 900°C for the 16 kinds of Invention and Reference Steels, and 1,030°C for Comparative Steels 2 to 4. Furthermore, the square bar was pre-hardened to have a hardness of 34 HRC under various tempering conditions. Then, the square bar was processed into impact test piece of 10 mm × 10 mm × 55 mm (U notch bottom radius: 1 mm, height under the notch: 8 mm, and cross-sectional area under the notch: 0.8 cm$^2$). An impact value means the value obtained by dividing the absorbed energy [J] in the impact test by the cross-sectional area (0.8 cm$^2$) of the test piece. The impact value at room temperature was evaluated by the average value of 10 test pieces.

In the case where the impact value is 70 J/cm$^2$ or higher, a gross crack hardly occurs unless there is a problem in die design. Therefore, the impact value was evaluated as "B" in the case where the impact value [J/cm$^2$] evaluated by the average value was 70 or higher; evaluated as "C" in the case where the impact value was 60 or higher and lower than 70; and evaluated as "D" in the case where the impact value was lower than 60.

The results are shown in Table 5. In the table, the actually measured impact values [J/cm$^2$] are shown in parentheses together with the evaluations of B, C and D.

In Comparative Steel 2, the amount of Mn+Cr, which enhance the hardenability, was low and the content of Mo, which lowers the toughness, was large as about 3%, so the impact value was low. Although Comparative Steel 3 did not have an extremely low impact value, there is a concern for the occurrence of a gross crack because the impact value did not exceed 70 J/cm$^2$. In contrast, Invention Steels had high impact values of 83 J/cm$^2$ or higher.

Evaluation on drill machinability:

A block of 40 mm × 55 mm × 200 mm was carved out from the above-prepared material, and the block was heated to a quenching temperature, held for 60 minutes, and then cooled to 100°C or less at a cooling rate of 12°C/min. The quenching temperature is 900°C for the 16 kinds of Invention and Reference Steels, and 1,030°C for Comparative Steels 2 to 4. Furthermore, the block was pre-hardened to have a hardness of 34 HRC under various tempering conditions.

Holes of 20 mm in depth were opened in the block by a high-speed steel drill with a diameter of 5 mm one by one, and the time point at which the drill was broken was treated as a drill service life. The drill service life was evaluated by varying the drilling rate. The drilling rate at which the cumulative depth of the holes became 1000 mm (i.e. 50 holes) was obtained, and this rate was set as an index of the drill machinability as VL 1000.

VL 1000 represents working efficiency, so the drill machinability was evaluated as "A" in the case where the value of VL 1000 exceeded 30; evaluated as "B" in the case where the value exceeded 23 and was 30 or less; evaluated as "C" in the case where the value exceeded 21 and was 23 or less; and evaluated as "D" in the case where the value was 21 or less.

The results are shown in Table 5. In the table, the actually measured values of VL 1000 are shown in parentheses together with the evaluations of A, B, C, and D.

Each Invention Steel had a large value of VL 1000 as 24 m/min or larger and was excellent in machinability. In particular, Invention Steel 16 containing S was excellent in machinability. It is considered that when machining the die made of Invention Steels, the service life of cutting tools will not be extremely short as compared to the case of conventional steels with the same hardness. Comparative Steel 4 had the poor machinability due to the large amount of Cr+Mo which increases the high-temperature strength.

After confirming the above-mentioned five basic characteristics, the practical performance was continuously evaluated by a die-casting test using materials with an industrial size. Evaluation objects were 19 kinds of steels (excluding Comparative Steels 1 and 5) in Table 4. Molten steels of these steels were each cast into a 10-ton ingot. The ingots were each homogenized by being held at 1,240°C for 24 hours, and then formed into a shape with a rectangular cross section of 570 mm × 270 mm by forging. The forged materials were heated to a quenching temperature depending on the components (900°C for the 16 kinds of Invention and Reference Steels; and 1,030°C for Comparative Steels 2 to 4), and quenched by being immersed in hot water at 60°C. Subsequently, the quenched materials were pre-hardened to have a hardness of 34 HRC under tempering conditions depending on the components, to thereby obtain pre-hardened steel materials.

Evaluation on heat check resistance:

A pair of die-casting dies including a movable die and a fixed die was manufactured from the inside (near the center) of the pre-hardened steel material, the dies were incorporated in a die-casting machine having a clamping force of 135 tons, and the heat check of the die was evaluated at the time when a casting product with a mass of 600 g was cast for 5,000 shots as a casting test. The molten metal was an ADC 12 at 700°C. In order to suppress the heat check, the application amount of a release agent was set to be small. A water-soluble release agent was used and applied at 3 cc per cycle in a mist form. The application amount of 3 cc refers to the sum of amounts of the release agent applied to the design surfaces of the pair of die from all nozzles, not the application amount per one nozzle.

Since the application amount on the release agent was small in this manner, in the evaluation of the outermost surface temperature by a thermos-viewer, in a steady state, the die temperature remained in a high temperature region in which the minimum attained temperature (after application of the release agent) of the die surface which contacts with the molten metal was 201°C or higher.

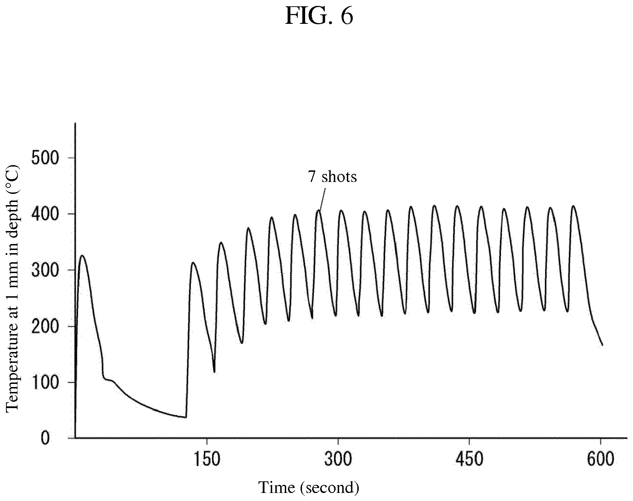

The temperature shift of the die surface is shown in FIG. 6. This graph shows the temperature at the depth of 1 mm from the surface obtained by the thermocouple loaded. Since thin shooting pins were used, the temperature reached the steady state (a state where both of maximum temperature and minimum temperature converge to respective certain values) quickly at about 7th shot. In the steady state after 7 shots, the minimum attained temperature exceeded 200°C. In ordinary die-casting with a large application amount of release agent, it is not uncommon that the minimum attained temperature of the die surface which contacts with the molten metal reaches a low temperature as less than 150 °C in the steady state.

There was a convex portion on the die surface, and it was evaluated whether or not a heat check occurred at the base of the convex portion which became a stress concentration portion. The determination of the occurrence the heat check was carried out by performing a penetrating inspection on the die and by palpating the transfer of the heat check to a forged product at the same time. The heat check resistance was evaluated as "A" in the case where the occurrence of the heat check was not observed; evaluated as "B" in the case where the occurrence of the heat check was minor; evaluated as "C" in the case where although the occurrence of the heat check was quite noticeable, there was no negative impact on the product; and evaluated as "D" in the case where the damage to the product was significant and the transfer to the product caused problems.

The results are shown in Table 5. The occurrence of the heat check was obvious in Comparative Steels 3 and 4, and in particular, Comparative Steel 3 having a low thermal conductivity was remarkably damaged. In contrast, Invention Steels had very good heat check resistance, and the heat check was not occurred in the base of the convex portion. However, a very slight heat check occurred in Reference Steels 3 and 10 having a slightly low thermal conductivity.

Evaluation on cycle shortening:

In the forging described above, the cycle shortening was also examined. In the case where the die formed of JIS SKD61 steel of Comparative Steel 3 was used, it took 10 seconds from injection to die-opening. When the die is opened earlier, the molten metal may flow out from the unsolidified portion, and the air entrapped within the unsolidified portion may expand due to the released pressure to rupture the unsolidified portion.

Here, evaluation for shortening the time from injection to die-opening was made by changing the steel type of the die. For Invention Steels, the above problem did not occur even in the case where the time from injection to die-opening was shortened by 2 seconds or more than that of JIS SKD61 steel. Although Comparative Steel 4 was possible to shorten the cycle time for a certain degree, the effect was insufficient.

Evaluation on cast microstructure:

In the above-mentioned casting, the microstructure of the cast product produced with the shortened cycle time was evaluated. The cast microstructure was evaluated as "A" in the case where the size and number of porosities were very small and the microstructure was extremely fine; evaluated as "B" in the case where although there were porosities but they were small and the microstructure was fine; evaluated as "C" in the case where the porosities were small but the microstructure was coarse; and evaluated as "D" in the case where there were lots of porosities and the microstructure was coarse.

The results are shown in Table 5. In the case where the die of JIS SKD61 steel of Comparative Steel 3 was used, the microstructure of the cast product was coarse and there were many porosities. There is a concern that there were problems in mechanical property and airtightness. On the other hand, in the case where the die formed of Invention Steels was used, the microstructure of the cast product was fine although the cycle time of casting was shortened. In particular, the effect of miniaturizing the microstructure was great in Invention Steels having a high thermal conductivity. In Comparative Steel 4, the microstructure of the cast product was miniaturized for a certain degree, but the improvement effect was insufficient.

According to the evaluation results described above, although Invention Steels had a small amount of Cr+Mo+V, which is directly related to the cost, and thus were inexpensive, they marked B or A in all characteristic evaluations. It can be seen that Invention Steels are excellent in the material cost and the heat check resistance, can reduce the cost of die-casting die, and at the same time, can achieve both the shortening of the die-casting cycle and high quality of the cast product. In addition, since Invention Steels has saved amounts of alloying elements, it can contribute to the reduction in environmental load.

On the other hand, it can be seen that, Comparative Steels having a large amount of Cr+Mo+V marked D and C, and the property was low in spite of their high costs.

As described in detail in Example of the present invention, the steel according to the present invention is suitable for a die-casting in which lowering of temperature of the die surface due to application of a release agent is small. In such a die-casting, the die is in a temperature range higher than usual die-casting. The effect of the present invention is particularly obvious in the case where in a steady state, the temperature of the "die surface which contacts with the molten metal" is 150°C or higher just after the release agent is applied. The die surface which contacts with the molten metal refers to the surface of the die which contacts with a portion to be a product of the casting product. Since the "runner", "overflow" or "burr" in the casting product is not the "portion to be a product", the die surface corresponding to the runner, overflow or burr portion is not included in the "die surface which contacts with the molten metal".

In the above-described Examples, the "water-soluble liquid" was selected for the release agent, and the release agent was applied in a mist form in a small amount (the die surface was not rapidly cooled), and the minimum attained temperature of the die surface which contacts with the molten metal remained at a high temperature range of 150°C or higher.

The same effect as in the above-described Examples can be obtained by using the steel of the present invention if the minimum attained temperature of the die surface which contacts with the molten metal is 150 °C or higher. For example, a release agent of the oily liquid type may be applied in a mist manner in a small amount or a release agent of powder type may be applied, as a similar release agent application method that does not rapidly cool the die surface.

It is also effective to perform shot-peening, nitriding treatment, PVD treatment, CVD treatment, PCVD treatment, plating treatment, and other surface modification treatment on the steel according to the present invention before usage. The steel according to the present invention is easy to react with the molten metal because the steel just has a few carbides, but the reaction with the molten metal can be suppressed by the surface modification. The steel according to the present invention, for example, can also be applied to powder or a plate used for die formation by additive manufacturing with the powder or plate, and can be used in welding repair of a main body or parts of a die as a bar line shape. As such, the present invention can be implemented in various modified forms without departing from scope of the present invention as defined in the appended claims.

**Claims**

1. A steel for a die-casting die,

   having a composition consisting of, in mass %:

   $0.18 \leq C \leq 0.24$,
   $0.001 \leq Si \leq 0.80$,
   $1.20 \leq Mn \leq 2.00$,
   $2.41 \leq Cr \leq 2.73$,
   $0.48 \leq Mo \leq 0.97$,
   $0.003 \leq V \leq 0.28$,
   $0.0005 \leq Al \leq 0.15$,
   $0.0002 \leq N \leq 0.050$, and
   optionally,
   $Cu \leq 1.50$,
   $Ni \leq 0.30$,
   $B \leq 0.0050$,
   $W \leq 4.00$,
   $Co \leq 3.00$,
   $Nb \leq 0.200$,
   $Ta \leq 0.200$,
   $Ti \leq 0.200$,
   $Zr \leq 0.200$,
   $S \leq 0.050$,
   $Ca \leq 0.2000$,
   $Se \leq 0.50$,
   $Te \leq 0.100$,
   $Bi \leq 0.50$, and
   $Pb \leq 0.50$,

   with the balance being Fe and unavoidable impurities, and
   having a hardness of 26 to 43 HRC and a thermal conductivity $\lambda$ [W/m/K] measured by using a laser flash method at 25°C being $27.0 \leq \lambda$.

2. The steel for a die-casting die according to Claim 1 comprising, in mass %:
   $0.30 < Cu \leq 1.50$.

3. The steel for a die-casting die according to Claim 1 or 2 comprising, in mass %,
   $0.0001 < B \leq 0.0050$.

4. The steel for a die-casting die according to any one of Claims 1 to 3 comprising, in mass %, at least one of:

   $0.30 < W \leq 4.00$ and
   $0.10 < Co \leq 3.00$.

5. The steel for a die-casting die according to any one of Clams 1 to 4 comprising, in mass %, at least one of:

   $0.004 < Nb \leq 0.200$,
   $0.004 < Ta \leq 0.200$,
   $0.004 < Ti \leq 0.200$, and
   $0.004 < Zr \leq 0.200$.

6. The steel for a die-casting die according to any one of Clams 1 to 5 comprising, in mass %, at least one of:

   $0.008 < S \leq 0.050$,
   $0.0005 < Ca \leq 0.2000$,
   $0.03 < Se \leq 0.50$,

0.005<Te≤0.100,
0.01<Bi≤0.50, and
0.03<Pb≤0.50.

**7.** A die-casting die formed of the steel described in any one of Claims 1 to 6.

**8.** Use of the die-casting die of claim 7 for die-casting.

**Patentansprüche**

**1.** Stahl für eine Druckguss-Matrize,

mit einer Zusammensetzung, die besteht aus, in Massen%:

0,18≤C≤0,24,
0,001≤Si≤0,80,
1,20≤Mn≤2,00,
2,41≤Cr≤2,73,
0,48≤Mo≤0,97,
0,003≤V≤0,28,
0,0005≤Al≤0,15,
0,0002≤N≤0,050, und
optional,
Cu≤1,50,
Ni≤0,30,
B≤0,0050,
W≤4,00,
Co≤3,00,
Nb≤0,200,
Ta≤0,200,
Ti≤0,200,
Zr≤0,200,
S≤0,050,
Ca≤0,2000,
Se≤0,50,
Te≤0,100,
Bi≤0,50, und
Pb≤0,50,

mit dem Rest Fe und unvermeidliche Verunreinigungen, und
mit einer Härte von 26 bis 43 HRC und einer Wärmeleitfähigkeit $\lambda$ [W/m/K], gemessen mittels einer Laserblitz-Methode, bei 25°C von 27,0≤ $\lambda$.

**2.** Stahl für eine Druckguss-Matrize gemäß Anspruch 1, beinhaltend, in Massen%:
0,30<Cu≤1,50.

**3.** Stahl für eine Druckguss-Matrize gemäß Anspruch 1 oder 2, beinhaltend, in Massen%,
0,0001<B≤0,0050.

**4.** Stahl für eine Druckguss-Matrize gemäß einem der Ansprüche 1 bis 3, beinhaltend, in Massen%, wenigstens eines von:

0,30<W≤4,00 und
0,10<Co≤3,00.

**5.** Stahl für eine Druckguss-Matrize gemäß einem der Ansprüche 1 bis 4, beinhaltend, in Massen%, wenigstens eines von:

0,004<Nb≤0,200,
0,004<Ta≤0,200,
0,004<Ti≤0,200, und
0,004<Zr≤0,200.

**6.** Stahl für eine Druckguss-Matrize gemäß einem der Ansprüche 1 bis 5, beinhaltend, in Massen%, wenigstens eines von:

0,008<S≤0,050,
0,0005<Ca≤0,2000,
0,03<Se≤0,50,
0,005<Te≤0,100,
0,01<Bi≤0,50, und
0,03<Pb≤0,50.

**7.** Druckguss-Matrize aus dem in einem der Ansprüche 1 bis 6 beschriebenen Stahl.

**8.** Verwendung der Druckguss-Matrize von Anspruch 7, für den Druckguss.

**Revendications**

**1.** Acier pour matrice de coulée sous pression, ayant une composition constituée, en % en masse, de :

$0,18 \leq C \leq 0,24$,
$0,001 \leq Si \leq 0,80$,
$1,20 \leq Mn \leq 2,00$,
$2,41 \leq Cr \leq 2,73$,
$0,48 \leq Mo \leq 0,97$,
$0,003 \leq V \leq 0,28$,
$0,0005 \leq A1 \leq 0,15$,
$0,0002 \leq N \leq 0,050$ et
éventuellement,
$Cu \leq 1,50$,
$Ni \leq 0,30$,
$B \leq 0,0050$,
$W \leq 4,00$,
$Co \leq 3,00$,
$Nb \leq 0,200$,
$Ta \leq 0,200$,
$Ti \leq 0,200$,
$Zr \leq 0,200$,
$S \leq 0,050$,
$Ca \leq 0,2000$,
$Se \leq 0,50$,
$Te \leq 0,100$,
$Bi \leq 0,50$, et
$Pb \leq 0,50$,

le reste étant du Fe et des impuretés inévitables, et
ayant une dureté de 26 à 43 HRC et une conductivité thermique À [W/m/K] mesurée à l'aide d'un procédé de flash laser à 25 °C étant de $27,0 < \lambda$.

**2.** Acier pour matrice de coulée sous pression selon la revendication 1, comprenant en % en masse :
$0,30 < Cu \leq 1,50$.

**3.** Acier pour matrice de coulée sous pression selon la revendication 1 ou 2, comprenant en % en masse :
$0,0001 < B \leq 0,0050$.

**4.** Acier pour matrice de coulée sous pression selon l'une quelconque des revendications 1 à 3, comprenant en % en masse :

0,30 < W ≤ 4,00 et/ou
0,10 < Co ≤ 3,00.

**5.** Acier pour matrice de coulée sous pression selon l'une quelconque des revendications 1 à 4, comprenant en % en masse :

0,004 < Nb ≤ 0,200, et/ou
0,004 < Ta ≤ 0,200, et/ou
0,004 < Ti ≤ 0,200, et/ou
0,004 < Zr ≤ 0,200.

**6.** Acier pour matrice de coulée sous pression selon l'une quelconque des revendications 1 à 5, comprenant en % en masse :

0,008 < S ≤ 0,050, et/ou
0,0005 < Ca ≤ 0,2000, et/ou
0,03 < Se ≤ 0,50, et/ou
0,005 < Te ≤ 0,100, et/ou
0,01 < Bi ≤ 0,50, et/ou
0,03 < Pb ≤ 0,50.

**7.** Matrice de coulée sous pression formée de l'acier décrit dans l'une quelconque des revendications 1 à 6.

**8.** Utilisation de la matrice de coulée sous pression selon la revendication 7 pour la coulée sous pression.

FIG. 1

Tempering Temperature (°C) for 2 hours

FIG. 2

FIG. 3

FIG. 4

# FIG. 5

FIG. 6

**EP 3 569 719 B1**

**REFERENCES CITED IN THE DESCRIPTION**

**Patent documents cited in the description**

- JP 2017043809 A
- FR 2838137 A1
- EP 0431557 A1